(19) Europäisches Patentamt

European Patent Office

Office européen des brevets

(11) **EP 1 919 098 B1**

(12) **EUROPEAN PATENT SPECIFICATION**

(45) Date of publication and mention
of the grant of the patent:
**22.07.2009 Bulletin 2009/30**

(51) Int Cl.:
*H04B 7/06* (2006.01)     *H04L 25/03* (2006.01)

(21) Application number: **06022649.5**

(22) Date of filing: **30.10.2006**

(54) **Receiver apparatus and method for providing precoding information**

Empfänger und Verfahren zur Lieferung von Vorcodierungsinformation

Récepteur et procédé pour fournir une information de précodage

(84) Designated Contracting States:
**DE GB**

(43) Date of publication of application:
**07.05.2008 Bulletin 2008/19**

(73) Proprietor: **NTT DoCoMo Inc.**
**Chiyoda-Ku**
**Tokyo 100-6150 (JP)**

(72) Inventor: **Abe, Tetsushi**
**80538 München (DE)**

(74) Representative: **Zinkler, Franz**
**Schoppe, Zimmermann, Stöckeler & Zinkler**
**Patentanwälte**
**Postfach 246**
**82043 Pullach bei München (DE)**

(56) References cited:
**WO-A-03/069800**     **WO-A-20/06075220**
**US-A1- 2004 174 808**     **US-A1- 2004 252 755**

**Description**

The present invention is in the field of multiple-input-multiple-output (MIMO) transmission as it is more and more used in mobile communication scenarios and as considered for future mobile communication systems.

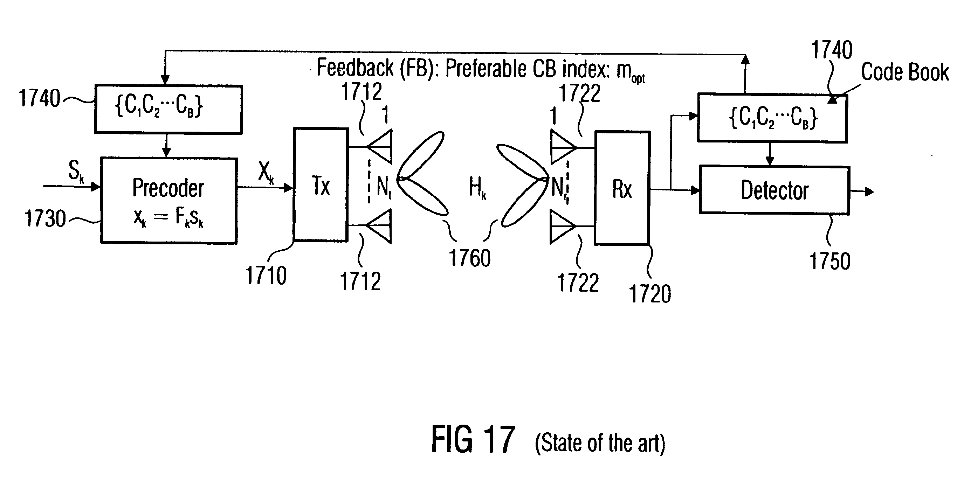

MIMO-systems in general can significantly improve system capacity of mobile communication systems. This is for example achieved as MIMO-systems can simultaneously transmit and receive multiple data streams using multiple transmit and receive antennas. Fig. 17 shows a general MIMO-system 1700. The scenario shows a transmit unit 1710 utilizing $N_t$ transmit antennas 1712. The signals transmitted by the transmit antennas 1712 are received by a receiver unit 1720 utilizing $N_r$ receive antennas 1722. Between the transmit antennas 1712 and the receive antennas 1722 there is a mobile radio channel, which is labeled with k in Fig. 17. The signals which are transmitted by the transmit unit 1710 are labeled $\mathbf{x}_k$ and are precoded by a precoding unit 1730. The precoding unit 1730 applies a precoding matrix $\mathbf{F}_k$ to the actual data streams $\mathbf{s}_k$ which are to be transmitted.

The precoding matrix $\mathbf{F}_k$ is based on a feedback received from the receiver side, which preferably uses a codebook in order to feed back an index $m_{opt}$. In the scenario depicted in Fig. 17 these indices are determined from a codebook 1740, which is available on the transmitter and on the receiver side. The received signals are detected by a detector 1750 on the receiver side, which carries out channel estimation, i.e. the channel $\mathbf{H}_k$ is estimated, a precoding evaluated based on the channel estimate, coded according to the available codebook 1740 and the index of the respective codebook is provided to the transmitter. Fig. 17 therefore shows a MIMO-system with a codebook based precoding scheme. MIMO-precoding schemes can transmit multiple data streams via multiple beams 1760 and can thus increase the system capacity.

Feeding back complete channel information from the receiver makes it possible to conduct perfect precoding at a transmitter, however this requires high amounts of feedback information, i.e. signaling channels from the receiver to the transmitter, which utilize high data rates for detailed feedback information. Therefore, the reduction of the amount of the feedback is a major challenge in the field of MIMO-systems with codebook based precoding. Codebook based linear precoding requires only transmission of the preferable index of the predetermined codebook set as feedback information and requires therewith less feedback information.

Referring to Fig. 17, where the numbers of transmit and receive antennas are $N_t$ and $N_r$, and the number of simultaneously transmitted streams is $N_s$, the transmitted signal vector at time k can be written as

$$\mathbf{x}_k = \begin{bmatrix} x_1 \\ \vdots \\ x_{N_t} \end{bmatrix} = \begin{bmatrix} f_{11} & \cdots & f_{1N_s} \\ \vdots & \ddots & \vdots \\ f_{N_t,1} & \cdots & f_{N_t,N_s} \end{bmatrix} \begin{bmatrix} s_1 \\ \vdots \\ s_{N_s} \end{bmatrix} \equiv \mathbf{F}_k \mathbf{s}_k, \tag{1}$$

where the precoding matrix $\mathbf{F}_k$ is computed from the elements of the codebook. In equation 1 the MIMO-channel $\mathbf{H}_k$ can be defined as

$$\mathbf{H}_k \equiv \begin{bmatrix} h_{11} & \cdots & h_{1N_t} \\ \vdots & \ddots & \vdots \\ h_{N_r,1} & \cdots & h_{N_r,N_t} \end{bmatrix}. \tag{2}$$

Design concepts of codebooks are classified either as "one-shot codebook" or "tracking codebook". The main difference between the two codebook design concepts are described in the following Table 1.

Table 1:

| Type | Description |
|---|---|
| **One-shot CB** | A current precoding matrix is independent of the previous one. |

(continued)

| Type | Description |
|---|---|
| Tracking CB | A current precoding matrix depends on the previous one. |

In case of one-shot codebooks each element of the codebook can be matrix or vector. The former is called matrix codebook and the latter is called vector codebook. In case of tracking codebooks conventional systems use vector codebooks with mostly recursive transmission algorithms as further detailed below.

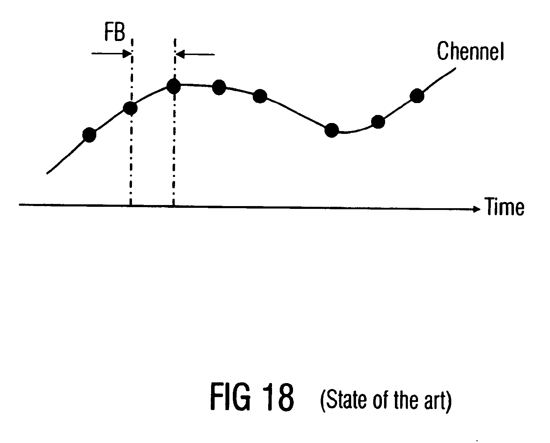

Fig. 18 shows a viewgraph of a channel coefficient of a mobile radio channel over a time axis. It is supposed that feedback is provided and channel samples taken in equidistant time periods, indicated in Fig. 18 by black dots. From the sampling points in Fig. 18 it can be seen that between two channel estimates and feedback periods the channel changes by a certain degree, which depends e.g. on the mobility within the communication scenario. In dependence on this change, the design concept of a codebook is chosen. If the channel changes are small, then the channel can be tracked, and a tracking codebook would be preferable. If the changes are rather high, then the one-shot codebook is preferable. In a practical wireless communication scenario, channels between two sample points can be correlated due to e.g. slow fading or a fast sampling frequency, which can be equivalent to a short feedback period. In this case a tracking codebook can offer a better trade-off between performance and required feedback bits, i.e. the required data rate on the feedback channel.

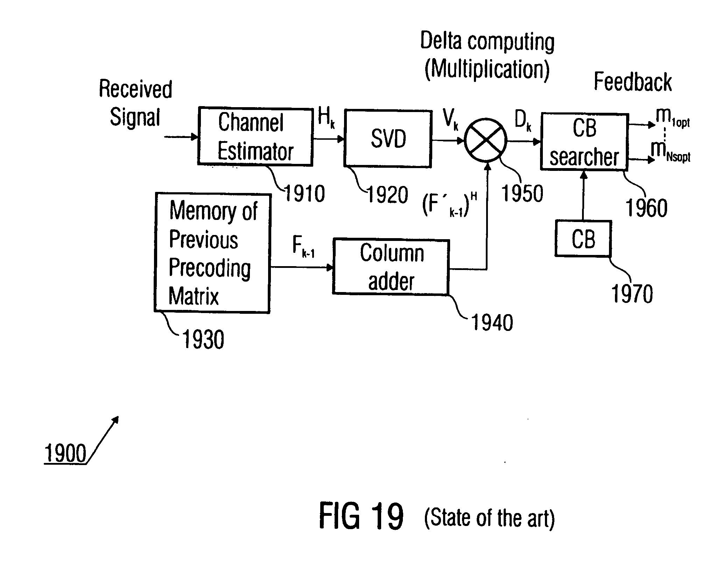

In the following an example system will be considered utilizing $N_t=4$ transmit antennas, $N_r=2$ receive antennas, and $N_s=2$ data streams. Furthermore throughout this description k denotes a time index. Fig. 19 shows a conventional receiver structure 1900. The conventional receiver 1900 comprises a channel estimator 1910 to which a received signal is provided. The channel estimator 1910 estimates the radio channel on the basis of reference symbols and provides a channel estimate $\mathbf{H}_k$ to a processing unit 1920, which carries out a singular value decomposition, yielding a unitary matrix $\mathbf{V}_k$, according to

$$\underset{\text{Current channel}}{\mathbf{H}_k = \begin{bmatrix} h_{11} & h_{12} & h_{13} & h_{14} \\ h_{21} & h_{22} & h_{23} & h_{24} \end{bmatrix}} \quad \underset{\mathbf{H}_k = \mathbf{U}_k \mathbf{\Lambda}_k \mathbf{V}_k^H}{\overset{\text{SVD}}{\Longrightarrow}} \mathbf{V}_k = \begin{bmatrix} v_{11} & v_{12} \\ v_{21} & v_{22} \\ v_{31} & v_{32} \\ v_{41} & v_{42} \end{bmatrix} \quad . \quad (3)$$

The receiver 1900 further comprises a memory 1930 where a previous precoding matrix $\mathbf{F}_{k-1}$ is stored.

The receiver 1900 further comprises a column adder 1940 for adding a column to the previous precoding matrix $\mathbf{F}_{k-1}$ yielding $(\mathbf{F'}_{k-1})^H$, according to

$$\mathbf{F}_{k-1} = \begin{bmatrix} f_{11} & f_{12} \\ f_{21} & f_{22} \\ f_{31} & f_{32} \\ f_{41} & f_{42} \end{bmatrix} \quad \overset{\text{Colum adding}}{\Longrightarrow} \mathbf{F'}_{k-1} = \begin{bmatrix} f_{11} & f_{12} & f_{13} & f_{14} \\ f_{21} & f_{22} & f_{23} & f_{24} \\ f_{31} & f_{32} & f_{33} & f_{34} \\ f_{41} & f_{42} & f_{43} & f_{44} \end{bmatrix} \quad (4)$$

$$\text{Dummy}$$

Equation 4 shows, that the column adder 1940 adds dummy columns to the previous precoding matrix $F_{k-1}$. In order to compute a delta matrix the outcome of the column adder 1940 and the processing unit 1920 are multiplied in a multiplier 1950, which delivers a delta matrix $\mathbf{D}_k$, which in turn is input into a codebook searcher 1960, according to

$$\mathbf{D}_k = \mathbf{F}_{k-1}'^H \mathbf{V}_k \qquad \Longrightarrow \qquad \mathbf{D}_k = \begin{bmatrix} d_{11} & d_{12} \\ d_{21} & d_{22} \\ d_{31} & d_{23} \\ d_{41} & d_{24} \end{bmatrix} \qquad (5)$$

The codebook searcher 1960 uses a codebook 1970 to encode the delta matrix $\mathbf{D}_k$ and delivers indices $m_{1_{opt}} ... m_{N_{sopt}}$ as indices for the vector codebook 1970, according to

$$\mathbf{D}_k = \begin{bmatrix} d_{11} & d_{12} \\ d_{21} & d_{22} \\ d_{31} & d_{23} \\ d_{41} & d_{24} \end{bmatrix} \xrightarrow{\ \mathbf{D}_2 = \mathbf{Q}_1 \mathbf{D}_1\ } \begin{bmatrix} e^{j\theta} & \varepsilon \\ \varepsilon & d_{22}' \\ \varepsilon & d_{23}' \\ \varepsilon & d_{24}' \end{bmatrix} \qquad \mathbf{Q}_1 = \mathbf{I} - \frac{2}{\|\mathbf{w}_1\|^2} \mathbf{w}_1 \mathbf{w}_1^H \;.$$

$$\mathbf{C}_{m_{1opt}} \to \text{Feedback} \qquad \mathbf{C}_{m_{2opt}} \to \text{Feedback} \qquad with\ \mathbf{w}_1 = \mathbf{c}_{m_{1opt}} - [1\,0...0]^T \quad . (6)$$

As can be seen from equation 6 the delta matrix $\mathbf{D}_k$ is coded column wise. So the first column is taken and an appropriate matching vector is searched in the codebook 1970, upon which the matrix can be reduced by one dimension utilizing a householder function $\mathbf{Q}_n$ as given in equation 6. With the reduced matrix the next column comprises one dimension less than the first column, thus requiring less feedback. More details on the receiver structure and the mathematical background can be found in R1-060868, Intel, "Performance and complexity of scaleable Precoded MIMO (LLS & SLS),"3GPP RAN1 LTE, Mar 2006.

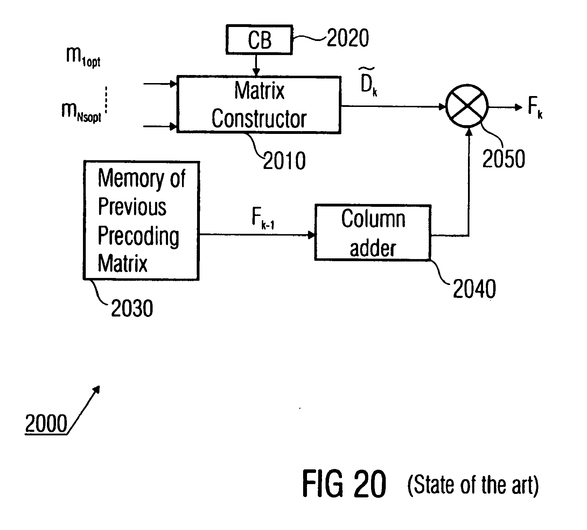

Fig. 20 displays a block diagram of a respective transmitter 2000. The transmitter 2000 comprises a matrix constructor 2010, which receives the codebook indices $m_{lopt} ... m_{Nsopt}$. The matrix constructor 2010 is coupled to codebook 2020 which is the same codebook as used on the receiver side. Using a recursive algorithm, the matrix constructor constructs an estimate $\widetilde{\mathbf{D}}_k$ for the respective delta matrix $\mathbf{D}_k$ from the codebook indices, according to

$$\begin{bmatrix} 1 & 0 \\ 0 & \\ 0 & \mathbf{C}_{m_{2opt}} \\ 0 & \\ 0 & \end{bmatrix} \xrightarrow{\ \mathbf{Q}_1 \times\ } \begin{bmatrix} d_{11}' & d_{12}' \\ d_{21}' & d_{22}' \\ d_{31}' & d_{32}' \\ d_{41}' & d_{42}' \end{bmatrix} \equiv \widetilde{\mathbf{D}}_k \qquad . \qquad (7)$$

The transmitter 2000 further comprises a memory 2030 with the stored previous precoding matrix $\mathbf{F}_{k-1}$ to which a column adder 2040 adds dummy columns according to

$$\mathbf{F}_{k-1} = \begin{bmatrix} f_{11} & f_{12} \\ f_{21} & f_{22} \\ f_{31} & f_{32} \\ f_{41} & f_{42} \end{bmatrix} \xrightarrow{\text{column add}} \mathbf{F}'_{k-1} = \begin{bmatrix} f_{11} & f_{12} & \overbrace{\begin{matrix} f_{13} & f_{14} \\ f_{23} & f_{24} \\ f_{33} & f_{34} \\ f_{43} & f_{44} \end{matrix}}^{\text{Dummy}} \\ f_{21} & f_{22} \\ f_{31} & f_{32} \\ f_{41} & f_{42} \end{bmatrix} , (8)$$

A multiplier 2050 then multiplies the column added previous precoding matrix and the estimated delta matrix to obtain a new precoding matrix, which can then be applied to the data streams **s** in order to obtain the transmit signals **x**, according to

$$\mathbf{F}_k = \begin{bmatrix} f'_{11} & f'_{12} \\ f'_{21} & f'_{22} \\ f'_{31} & f'_{32} \\ f'_{41} & f'_{42} \end{bmatrix} = \mathbf{F}'_{k-1}\widetilde{\mathbf{D}}_k \implies \mathbf{x} = \mathbf{F}_k \mathbf{s} \qquad . \qquad (9)$$

Alternatively, the above equation can also be amended as follows:

$$\mathbf{x} = \mathbf{F}_k \mathbf{P} \mathbf{s}$$

In this equation, P is the Ns x Ns power allocation matrix.

The conventional transmitter 2000 and the conventional receiver 1900 use the same codebooks 2020 respectively 1970, which is comprised of vectors of a different length, performing the recursive delta matrix coding algorithm. Equation 10 describes a codebook **CB** in more detail,

$$\mathbf{CB} : \{\mathbf{C}_1 \dots \mathbf{C}_B\}$$
$$C_m (m=1,\dots,B) : N_t \text{ x } 1 \text{ vector (for } m_1) \qquad \qquad .(10)$$
$$N_r 1 \text{ x } 1 \text{ vector (for } m_2)$$

More details on the transmitter structure and the mathematical background can be found in R1-060868, Intel, "Performance and complexity of scaleable precoded MIMO (LLS & SLS)", 3GPP RAN1 LTE, Mar 2006.

The Figs. 19 and 20 show a receiver 1900 and a transmitter 2000 of a conventional precoding scheme with tracking capability where the current precoding matrix is updated using the previous one. The conventional scheme has the disadvantage that a column adder is required in order to adjust the size of the matrices. This is due to the fact that a precoding matrix is updated by multiplying the previous precoding matrix from the left hand side according to

$$\mathbf{F}_k = \mathbf{F}'_{k-1}\widetilde{\mathbf{D}}_k \qquad . \qquad (11)$$

The number of added columns or dummy columns depends on the number of transmitted data streams. Moreover, the conventional scheme has the disadvantage that a matrix constructor 2010 is required on the transmitter side in order to form $\tilde{\mathbf{D}}_k$ from the feedback indices. This is owing to the fact that in the conventional scheme multiple indices are fed back due to the use of a vector codebook, where the multiple indices also provide a disadvantage that more feedback bits or a higher feedback data rate is required. Furthermore, the conventional scheme provides the disadvantage that a processing unit 1920 is required in order to carry out a singular value decomposition. The singular value decomposition is a complex mathematical operation, which requires extra processing power on the receiver side. Overall the conventional system has the disadvantage that a high hardware and software complexity is required in order to implement the precoding scheme.

WO 03/069800 A1 discloses a data transfer method in a radio system utilizing a multiple antenna method, the data transfer method comprising generating, at a receiver, at least part of a change in a variable which contains transmitter filter information on a transmitter as compared with the previous value of the variable, transmitting at least part of the change in the variable containing transmit filter information on the transmitter from the receiver to the transmitter and updating, at the transmitter, the transmit filter information on the transmitter on the basis of the received change in the variable containing transmit filter information. The invention further relates to a radio system implementing the method, in the solution, the amount of data used for updating transmit filter information and to be transmitted to a transmitter is optimized, which enables unnecessary loading of radio capacity to be avoided. The updating method disclosed comprises periodical updates from the receiver to the transmitter, respectively updates on the transmitter request.

It is the object of the present invention to provide a more robust scheme for providing precoding information in a mobile communication system.

The object is achieved by a receiver apparatus according to claim 1, a method for providing precoding information according to claim 13 and a computer program according to claim 14.

The present invention is based on the finding that a more robust precoding scheme can be established, if differential precoding updates are used if there is significant coherence between two sample points of a mobile radio channel, and absolute precoding updates are used when there is a low coherence between two sample points of a mobile radio channel. Embodiments of the present invention provide the advantage, that it is possible to switch between absolute and differential updates enabling an adaptation of the update method in a precoding scheme with e.g. MIMO transmission.

In one embodiment differential updates are used for small changes of the channel, which can be provided with a higher resolution, whereas absolute updates are used if the channel has changed significantly on a courser resolution.

Embodiments of the present invention provide the advantage, that a higher channel or system capacity can be achieved with less feedback bits, i.e. with a lower data rate and a feedback channel. Therewith valuable transmission resources can be conserved while a wider range of radio channel changes can be covered.

The present invention will be detailed using the figures attached, in which

Fig. 1        shows an embodiment of a receiver apparatus;

Fig. 2        shows another embodiment of a receiver apparatus;

Fig. 3        shows an embodiment of a transmitter apparatus;

Fig. 4        shows another embodiment of a transmitter apparatus;

Fig. 5        shows an embodiment of a MIMO transmission system;

Fig. 6        shows an embodiment of a codebook generator apparatus;

Fig. 7        shows an embodiment of a method for generating a plurality of update matrices;

Fig. 8a       shows a pseudo code of an embodiment of a method for generating a plurality of update matrices;

Fig. 8b       shows a viewgraph illustrating achievable capacity improvements with a respective embodiment.

Fig. 9        shows another embodiment of a receiver apparatus;

Fig. 10       shows another embodiment of a receiver apparatus;

Fig. 11       shows another embodiment of a transmitter apparatus;

Fig. 12    shows another embodiment of a transmitter apparatus;

Fig. 13    shows an embodiment of a method for updating precoding information with absolute and differential precoding update information;

Fig. 14    shows an embodiment of a method for providing precoding information;

Fig. 15    shows a viewgraph illustrating achievable capacity improvements with a respective embodiment;

Fig. 16a    shows simulation results illustrating the capacity improvements of respective embodiments;

Fig. 16b    shows simulation results illustrating the capacity improvements over an average signal-to-noise-ratio achievable with respective embodiments.

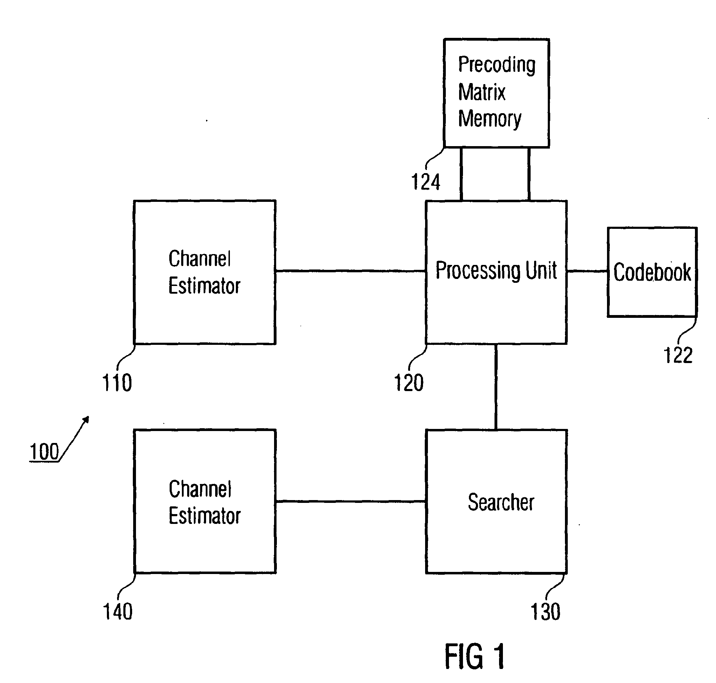

Fig. 1 shows an embodiment of a receiver apparatus 100. The receiver apparatus 100 is comprised of channel estimator 110, which is coupled with a processing unit 120. The processing unit 120 is coupled with a codebook 122, a precoding matrix memory 124 and a searcher 130. The searcher 130 is coupled with a transmit unit 140. The receiver apparatus 100 is adapted for controlling a precoding operation in a transmitter within a transmission scheme having a first number of transmit antennas and a second number of receive antennas, the first number being larger than one and the second number being larger or equal to one. The receiver apparatus 100 comprises the channel estimator 110 for estimating a radio channel between the transmitter and the receiver apparatus 100 based on a received signal to determine a radio channel estimate.

The receiver apparatus 100 further comprises the processing unit 120 providing possible new matrices based on update information items stored in an update codebook and an old precoding matrix. stored in the precoding matrix memory 124, an update matrix may or may not have at least two rows and at least two columns. The receiver apparatus 100 further comprises the searcher 130 for searching a new precoding matrix fulfilling an optimization criteria based on the radio channel estimate among the possible new precoding matrices and a transmit unit 140 for transmitting an update matrix index, which is associated with the new precoding matrix found when searching the new precoding matrices.

In one embodiment the second number of receive antennas is larger than one and a precoding matrix having at least two rows and at least two columns. The processing unit may be adapted for providing a new possible precoding matrices by multiplication, the multiplication having an update matrix and the old processing matrix as multiplication partners. Moreover, the receiver apparatus 100 can be adapted for receiving multi-carrier signals and being operative for controlling a precoding operation in each of or a group of carriers in the multi-carrier signals.

In one embodiment the processing unit 120 is implemented as a multiplier and multiplies the old precoding matrix from the precoding matrix memory 124 with the update matrices from the codebook 122. Once a new precoding matrix is found, the processing unit can update the precoding matrix for the next update iteration.

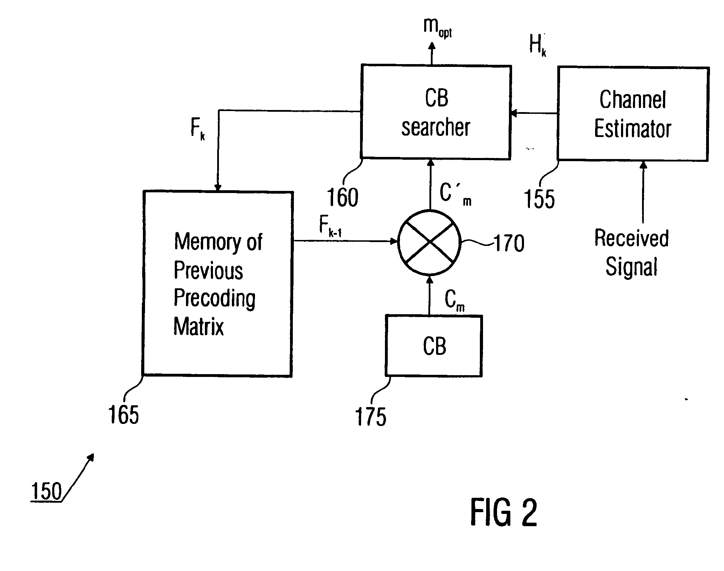

Fig. 2 shows another embodiment of a receiver apparatus 150. The receiver apparatus 150 comprises a channel estimator 155, which evaluates a channel estimate $\mathbf{H}_k$ from the received signal and provides the channel estimate $\mathbf{H}_k$ to a codebook searcher 160. The receiver further comprises a memory 165 for previous precoding matrices $\mathbf{F}_{k-1}$, which are multiplied by a multiplier 170 with update matrices $\mathbf{C}_m$ from a codebook 175, yielding a set of new precoding matrixes $\mathbf{C'}_m$, which is also provided to the codebook searcher 160. The updated precoding matrices are given by

$$\{\mathbf{C}'_1 \cdots \mathbf{C}'_l\} = \{\mathbf{C}_p \mathbf{F}_{k-1} \cdots \mathbf{C}_q \mathbf{F}_{k-1}\} \qquad , \qquad (12)$$

where the previous precoding matrix $\mathbf{F}_{k-1}$ is multiplied on the right hand side in order to determine a set of possible new precoding matrices to be searched. Generally 1 is an integer smaller than or equal to B, p is a lower multiplication index greater than or equal to one and q is a higher multiplication index smaller than or equal to B. Thus, one can also calculate a subset of the indices from 1 to B e.g. 1,2,4,B. In this case p would be 1 and q would be B and there would only be two numbers in between, such as 2,4.

In yet another embodiment another matrix may be multiplied, i.e. $\mathbf{C'}_k = \mathbf{C}_k \mathbf{A}_k \mathbf{F}_{k-1}$, in order to carry out any other precoding or adaptation task. The codebook searcher 160 carries out a search throughout all updated precoding matrices $\mathbf{C'}_m$ in order to find an optimized precoding matrix $\mathbf{C'}_{m_{opt}}$, which for example in one embodiment maximizes the channel capacity for the given channel estimate $\mathbf{H}_k$, which can be denoted as

$$m_{opt} = \arg\max_{m} Capacity(\mathbf{H}, \sigma^2, \{\mathbf{C}'_m\}) \quad , \tag{13}$$

wherein $\sigma^2$ denotes the noise variance or noise power. Note that in other embodiments the optimisation criterion may be different, for example maximizing a signal-to-noise-ratio or other metrics relating to a quality of a communication link. The codebook searcher 160 determines the optimum precoding matrix $\mathbf{C}'_{m_{opt}}$, which can then be provided to the memory 165 of previous precoding matrices as $\mathbf{F}_k$ for the next iteration of the precoding update. Furthermore, the codebook searcher 160 provides the index of the found optimized update matrix $\mathbf{C}'_{m_{opt}}$, i.e. $m_{opt}$ to the transmitter.

In another embodiment the codebook searcher 160 determines a maximum capacity on the basis of a minimum-mean-square-error-successive-interference-cancellation detection (MMSE-SIC = minimum-mean-square-error-successive-interference-cancellation). In another embodiment the processing unit 120 (Fig. 1) comprises a storage means for storing the codebook, according to the codebook 175.

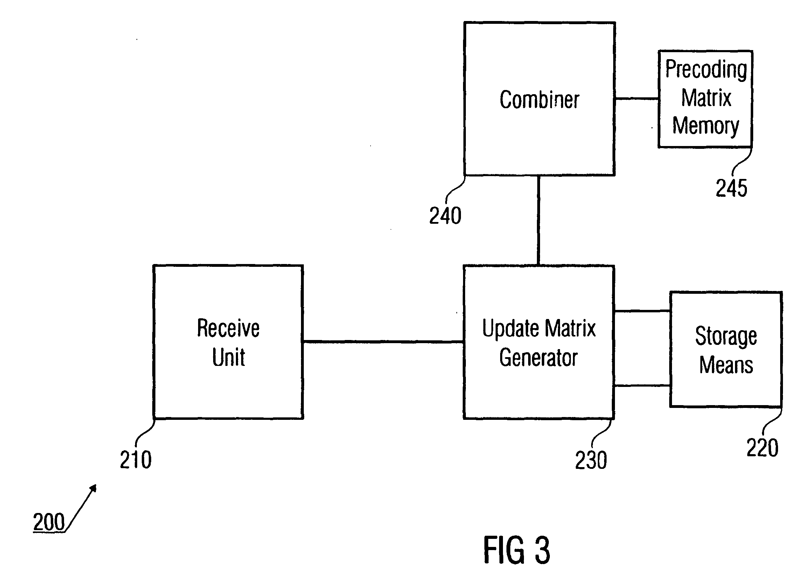

Fig. 3 shows an embodiment of a transmitter apparatus 200. The transmitter apparatus 200 comprises a receive unit 210, a storage means 220, an update matrix generator 230, a combiner 240, and a precoding matrix memory 245.

The transmitter apparatus 200 is adapted for transmitting a precoded signal, the signal being precoded using a an updated precoding matrix stored in the precoding matrix memory 245 within transmission scheme having a first number of transmit antennas and a second number of receive antennas, the first number being larger than one and the second number being larger or equal to one. The transmitter apparatus 200 comprises the receive unit 210 for receiving a received update index and the storage means 220 for storing a codebook having different update information items, each update information item having associated therewith an update index. The transmitter apparatus 200 further comprises the update matrix generator 230 for generating an update matrix having at least two rows and at least two columns using the received update index and the associated update information item from the codebook comprised within the storage means 220 and the combiner 240 for combining an earlier used precoding matrix 245 and the update matrix provided by the retriever 230 to obtain the updated precoding matrix.

In one embodiment the receive unit 210 can be adapted for receiving a received update matrix index ($m_{opt}$) and the storage means 220 being adapted for storing a codebook having different update matrices ($\mathbf{C}_m$), each update matrix ($\mathbf{C}_m$) having associated therewith an update matrix index (m), an update matrix ($\mathbf{C}_m$) having at least two rows and at least two columns.

In another embodiment the combiner 240 is adapted for obtaining the updated precoding matrix ($\mathbf{F}_k$) by multiplication, the multiplication having the earlier used precoding matrix ($\mathbf{F}_{k-1}$) and the update matrix ($\mathbf{C}_{m_{opt}}$) as multiplication partners and the earlier used precoding matrix ($\mathbf{F}_{k-1}$) being multiplied on the right hand side. The second number of receive antennas may be larger than one, and a precoding matrix ($\mathbf{F}_{k-1}$, $\mathbf{F}_k$) can be a square matrix. Moreover, an update matrix ($\mathbf{C}_m$) may be square matrix. The transmitter apparatus 200 may be adapted for transmitting multi-carrier signals and being operative for controlling a precoding operation in each of or a group of carriers in the multi-carrier signals.

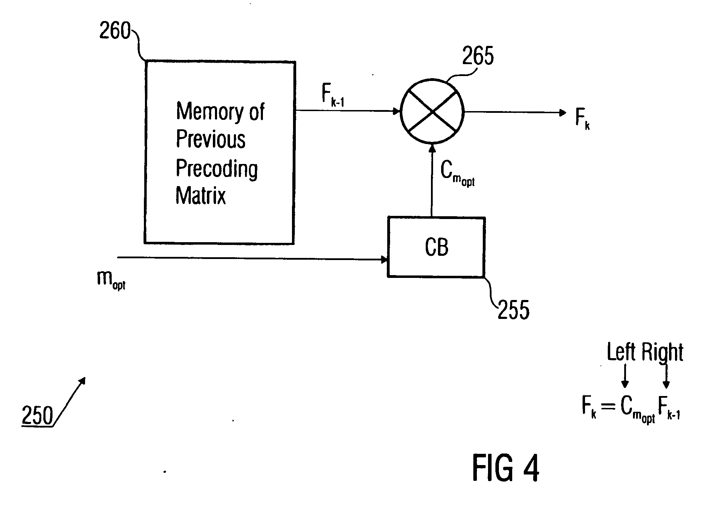

Fig. 4 shows another embodiment of a transmitter apparatus 250. The transmitter apparatus 250 comprises a codebook 255, which is provided with the optimum update matrix index $m_{opt}$, which is received from a receiver. With the received update matrix index, the codebook can provide the associated update matrix $\mathbf{C}'_{m_{opt}}$. The transmitter apparatus 250 further comprises a memory 260 for storing the previous precoding matrix $\mathbf{F}_{k-1}$. Furthermore, the receiver apparatus 250 comprises a multiplier 265, which multiplies the update matrix with the previous precoding matrix according to

$$\mathbf{F}_k = \mathbf{C}_{m_{opt}} \mathbf{F}_{k-1} \; . \tag{14}$$

The multiplier 260 can then provide the updated precoding matrix $\mathbf{F}_k$. According to the embodiment shown in Fig. 4, the combiner 240 can be implemented as a multiplier 265. In another embodiment, the transmitter apparatus 200 respectively 250 comprises a precoder for applying the precoding matrix $\mathbf{F}_k$ to a transmit signal.

Furthermore the precoding matrix $\mathbf{F}_k$ can be initialized in another embodiment, initialization may help to reduce a tracking error in some situations. The initialization can be done on a periodical basis or it can be triggered by a control signal or feedback from a receiver. The initialization matrix can be one element of the codebook and in an embodiment it can be composed of unit vectors as taken from an identity matrix, e.g. for $N_t$=4 transmit antennas and $N_s$=2 data streams

$$\begin{bmatrix} 1 & 0 & 0 & 0 \\ 0 & 1 & 0 & 0 \\ 0 & 0 & 1 & 0 \\ 0 & 0 & 0 & 1 \end{bmatrix} \quad \Rightarrow \quad \mathbf{F_0} = \begin{bmatrix} 1 & 0 \\ 0 & 1 \\ 0 & 0 \\ 0 & 0 \end{bmatrix} \qquad . \qquad (15)$$

Note an essential difference to the conventional scheme is that the precoding matrix is updated by multiplying the previous precoding matrix to $C'_{m_{opt}}$ from the right hand side. This eliminates the need for a column adder for a matrix size adjustment and the need for a singular value decomposition. Furthermore, the use of a matrix codebook instead of a vector codebook as in a conventional scheme eliminates the need for a matrix constructor, and in addition reduces the required feedback information. Therefore, embodiments provide the advantage that they reduce the hardware and software complexity in a transmitter and in a receiver. Furthermore, the required feedback information is less than in the conventional scheme, therefore requiring less feedback bits , data rate, and transmission resources in the feedback channel.

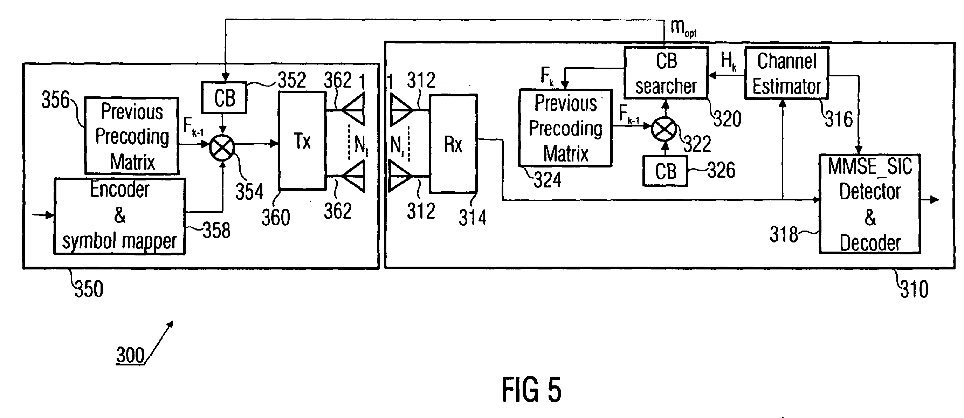

Fig. 5 shows a MIMO transmission system 300, comprising an embodiment of a receiver apparatus 310. The receiver apparatus 310 comprises a number $N_r$ of receive antennas 312 being coupled to a receive unit 314. The receive unit 314 provides a received signal to a channel estimator 316 and to an MMSE-SIC detector and decoder 318. The channel estimator 316 then provides a channel estimate to the MMSE-SIC detector and decoder 318 and to a codebook searcher 320, which is coupled to a multiplier 322 from which it is provided with the result of the multiplication of a previous precoding matrix $\mathbf{F}_{k-1}$ stored in a storage means 324 and update matrices from a codebook 326, similar to what was described above. Once having found the optimum update matrix, the codebook searcher 320 provides the optimum update matrix index $m_{opt}$ to a transmitter apparatus 350.

Generally, the MIMO system can also be a generalized MIMO system having a single receive antenna and two or more transmit antenna. Preferably, the first and the second number are such that a precoding matrix $\mathbf{F}_k$, $\mathbf{F}_{k-1}$ has more rows than columns.

The transmitter apparatus 350 comprises a codebook 352, which receives the optimum update matrix index $m_{opt}$ from the receiver apparatus 310. The codebook 352 can then provide the optimum update matrix to a multiplier 354. The multiplier 354 further receives the previous precoding matrix $\mathbf{F}_{k-1}$ from a previous precoding matrix storage 356. An encoder and symbol mapper 358 provides a transmit signal to the multiplier 354, which multiplies the transmit signal with the updated precoding matrix and provides the result to a transmit unit 360. The transmit unit 360 utilizes a number $N_r$ of transmit antennas 362 to transmit the signal through the radio channel to the receiver apparatus 310.

In the embodiment shown in Fig. 5, the codebook searcher 320 can evaluate the optimum update matrix, e.g. by optimizing a link or system capacity, which can be calculated assuming MMSE-SIC detection, and therefore in one embodiment the codebook searcher 320 and the MMSE-SIC detector and decoder 318 can partially share circuits, which leads to a further reduction of the hardware and software complexity. Furthermore, in another embodiment, each of the codebook matrices is a unitary matrix, which will be further detailed below. In embodiments of codebook based precoding systems, the transmitter and the receiver should share the same codebook. The codebook can be generated offline and stored in a storage medium or memory in a transmitter as well as in a receiver. Generally, the generation of a codebook relates to the system performance, therefore is the generation of a codebook critical. According to the embodiments described above, each element of the considered codebooks $\mathbf{C}_k$ is an $N_t$ x $N_t$ matrix. Additionally, as described above, a tracking precoding scheme is assumed, so the codebook should be generated to have tracking capability.

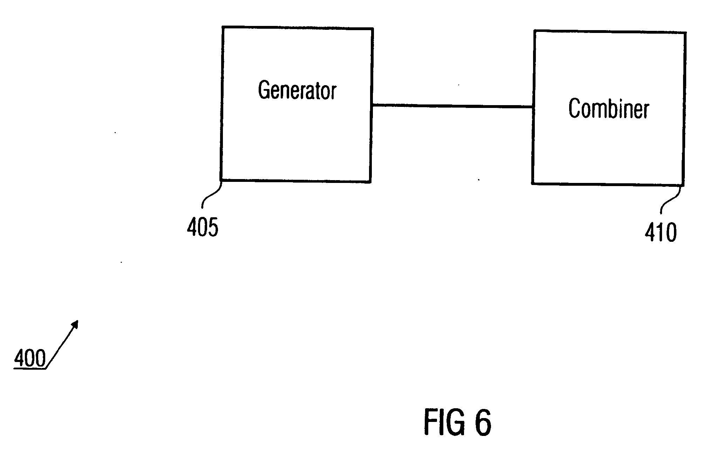

Fig. 6 shows an embodiment of a codebook generator apparatus 400, which comprises a generator 405 and a combiner 410. The embodiment of the codebook generator apparatus 400 is adapted for generating a codebook comprising one or more update matrices to be used in a precoding scheme with a transmission scheme having a first number of transmit antennas and a second number of receive antennas, the first number being larger than one and the second number being larger or equal to one, calculating each update matrix, comprising a generator (405) for generating a first matrix and for generating a second matrix being correlated with the first matrix by a correlation degree and comprising a combiner (410) for combining the first matrix and the second matrix to obtain one update matrix.

The codebook generator apparatus 400 can generate a codebook having at least two update matrices to be used in a precoding operation, each update matrix being associated with an update matrix index the update matrices being calculated by generating a first matrix and by generating a second matrix being correlated with the first matrix by a correlation degree and by combining the first matrix and the second matrix to obtain one update matrix, where for calculating different update matrices, a different correlation degree or a different first matrix and the same correlation degree is used.

In one embodiment the generator 405 is adapted for generating matrices with column vectors having a magnitude between 0.5 and 1.5 and with angles between any two column vectors being between 45° and 145°. In another embodiment the generator 405 is adapted for generating unitary matrices, matrices which have orthogonal columns, or matrices which are close to orthogonal, which can for example be based on random or pseudo-random matrices. In another embodiment each of the update matrices has an associated unique update matrix index. In yet another embodiment the combined update matrix has elements on its diagonal, whose magnitudes are at least twice as high as a magnitude of any off-diagonal element. The correlation degree between the first and the second matrix can for example be realized by a generator having a coherence time, i.e. the correlation degree corresponding to a time shift between two generated matrices. The correlation degree can further be associated with the fading property of a radio channel. In an embodiment of a larger codebook matrices with a number of different correlation degrees are considered for generating the update matrices. For example the first and second matrices can be generated using a Jakes model.

In another embodiment of codebook generator apparatus 400, the generator 405 can be adapted for generating the first and second matrices by generating random matrices to which a singular value decomposition is applied or any matrix triangularization method, in order to obtain unitary matrices. The unitary matrices may then be multiplied to each other in order to create an update matrix also being unitary, which has tracking capability. In yet another embodiment the codebook as described above may be stored on a storage medium. When using matrix codebooks, it is preferable that each element matrix of the codebook is a unitary matrix, which has orthogonal columns leading to a better performance and lower complexity.

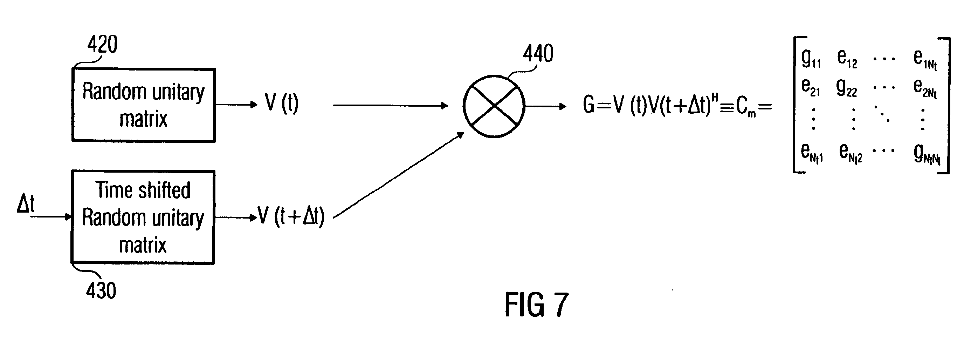

Fig. 7 shows an embodiment of a codebook generation method. A first unitary matrix $\mathbf{V}(t)$ is generated by a random unitary matrix generator based on a given time shift $\Delta t$. The two matrices are then multiplied in a step 440 of which the outcome is a matrix $\mathbf{G}$, according to

$$\mathbf{G} = \mathbf{V}(t)\mathbf{V}(t+\Delta t)^H \equiv \mathbf{C}_m = \begin{bmatrix} g_{11} & \varepsilon_{12} & \cdots & \varepsilon_{1N_t} \\ \varepsilon_{21} & g_{22} & \cdots & \varepsilon_{2N_t} \\ \vdots & \vdots & \ddots & \vdots \\ \varepsilon_{N_t 1} & \varepsilon_{N_t 2} & \cdots & g_{N_t N_t} \end{bmatrix} \quad , \tag{16}$$

yielding one update matrix $\mathbf{C}_m$ as given in equation 16. According to the embodiment in Fig. 7, each element of the codebook is generated by multiplying two random unitary matrices. Therefore, the resulting matrix is also unitary. Additionally, the two unitary matrices are time shifted versions from each other, i.e. for as long as the generator has a coherence time, they are correlated accordingly, so the resulting codebook element has a tracking capability. More specifically, also referring to equation 16, when a channel variation between two sample periods, i.e. between two feedback periods, is small, the off-diagonal elements $\varepsilon_{ij}$ of $\mathbf{C}_m$ are small compared to the diagonal elements $g_{ii}$.

Such a matrix is for finer precoding matrix adjustment. If the channel variation between two sampled periods is large, for example due to fast fading in the radio channel, the off-diagonal elements $\varepsilon_{ij}$ should be as large as the diagonal elements $g_{ii}$ to enable a more dynamic precoding matrix adjustment. Therefore, when the codebook is designed in such a way that each element matrix is generated from various $\Delta t$, update matrices can be generated for various channel environments. Therefore, embodiments provide the advantage that the codebook can be adapted to various environments based on the time shift $\Delta t$, respectively based on the correlation degree.

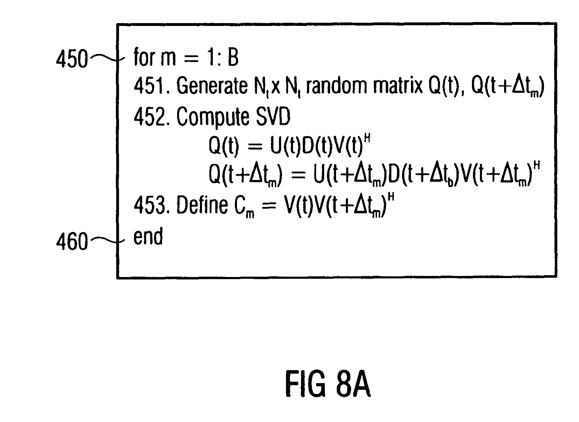

Fig. 8a shows a pseudo code of an embodiment of a method for generating an according codebook. In the pseudo code, depicted in Fig. 8a B is the codebook size and accordingly a loop runs over B iterations indicated by the "for"-loop in steps 450 and 460. In a step 451 two matrices of size $N_t \times N_t$ are generated, which are time shifted by $\Delta t$. In a step 452 singular value decompositions of both matrices are calculated, and in a step 453 two obtained unitary matrices from step 452 are multiplied in order to obtain one update matrix $\mathbf{C}_m$. The loop then runs over B iterations. The random matrices generated in step 451 may be generated based on a Jakes model, which is also widely used to generate fading coefficients. The singular value decomposition is used to obtain unitary matrices. In step 453, each element of the codebook is computed. Furthermore, the process of Fig. 8a can be repeated for a sufficient number of times in order to obtain an optimum set of codebooks or update matrices in terms of achievable channel capacities depending on the environment.

In another embodiment a subset of the matrix $\mathbf{G}$ could be defined as

$$\mathbf{G} = \mathbf{V}(t)\mathbf{V}(t + \Delta t)^{H} \equiv \begin{bmatrix} \boxed{g_{11}} & \varepsilon_{12} & \cdots & \varepsilon_{1N_t} \\ \varepsilon_{21} & g_{22} & \cdots & \varepsilon_{2N_t} \\ \vdots & \vdots & \ddots & \vdots \\ \varepsilon_{N_t 1} & \varepsilon_{N_t 2} & \cdots & g_{N_t N_t} \end{bmatrix} \Rightarrow \underline{C}_m = \begin{bmatrix} \begin{bmatrix} \\ \\ \end{bmatrix} \end{bmatrix} \qquad , \quad (17)$$

i.e. a subset e.g. a row or column vector of $\mathbf{V}(t)\mathbf{V}(t+\Delta t)^{H}$ is used to generate an update matrix for the codebook. In one embodiment the combiner (410) is adapted for using only a subset of a combination of the first and the second matrices for generating an update matrix and in yet another embodiment the subset corresponds to a row or column vector.

The codebook generator apparatus (400) may have the generator being adapted for generating the first and second matrices in order to optimize a channel capacity by several trials. The codebook generator apparatus (400) can further comprising a means for quantizing the update matrices. The update matrices may be square matrices in another embodiment. Alternatively, they can be symmetric or conjugate symmetric matrices as e.g. expressed by (A^T=A, A^H=A) .

The matrices , which are generated as part of the pseudocode in Fig. 8a can have propagation channel properties. In one embodiment they may be generated as mutually random independent identically distributed variables, i.e. the correlation degree can also be zero. In another embodiment they can be generated as mutually correlated random variables, where the correlation value or degree can be adjusted. In yet another embodiment a range of different correlation values is covered. There may also exist an imbalance among the average power of each of the components, i.e. $\|q_{11}\|^2 \neq \|q_{22}\|^2$. If the codebook gets generated considering the characteristics of the actual propagation channel, such as correlation between antennas and average power imbalance among antennas or propagation paths, the link or system capacity can even further be increased. Furthermore the codebook may include update matrices, which are close or even identical to an identity matrix, which provides the option of not updating a precoding matrix in some situations, in which it might be more beneficial to not update the precoding matrix.

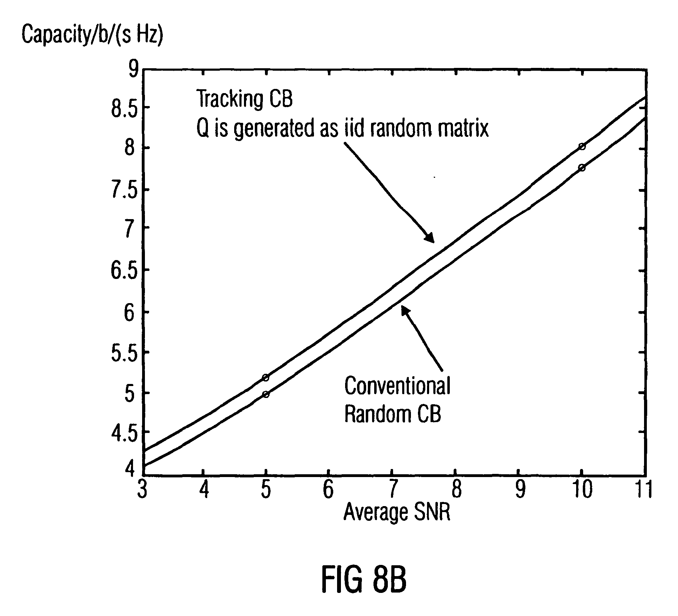

Fig. 8b shows a viewgraph of achievable capacity improvements with an embodiment. Fig. 8b shows two link capacity graphs versus an average signal-to-noise-ratio (SNR). The figure at the top is achieved with the embodiment, the figure at the bottom with the conventional scheme. An exemplified scenario with a number $N_t$=4 of transmit antennas, a number $N_r$=2 receive antennas, and a number $N_s$=2 of data streams is considered. The embodiment provides a capacity improvement of about 0.3b/(s Hz).

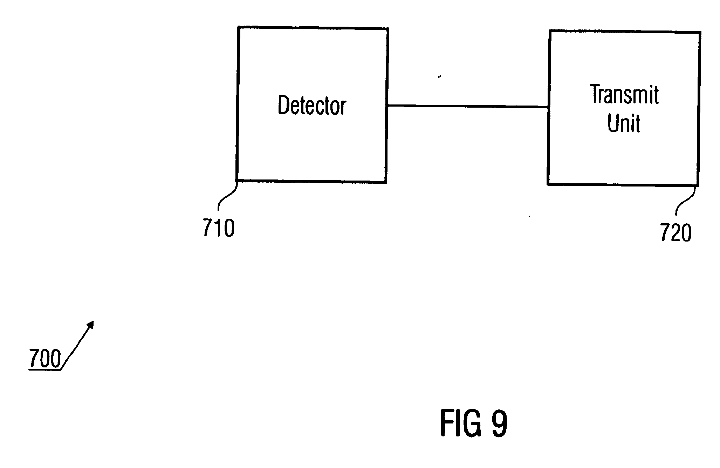

Codebook based precoding with tracking capability exploits the channel coherence between two sample points, i.e. the coherence of one feedback period, and thus offers higher capacity then one-shot codebook based precoding. However, if feedback errors occur or sudden changes in the propagation channel occurs, tracking of a reliable precoding matrix can sometimes be difficult. Therefore, instead of providing differential update information, as in the case of codebook based precoding with tracking capability, it can in some situations be beneficial to provide absolute precoding information, as in the case of one-shot codebook based precoding. Fig. 9 shows a receiver apparatus 700 comprising a detector 710 and a transmit unit 720. The receiver apparatus 700 is adapted for providing precoding information, comprising a detector 710 for detecting an event and a transmit unit 720 for transmitting absolute precoding information at a first time instant in response to a detected occurrence of the event and for transmitting differential precoding information at a second time instant different from the first time instant.

In an embodiment, the detector 710 is adapted for detecting as the event a lapse of a predefined period since an earlier time instant, at which the absolute precoding information was sent or, as the event, a situation in which the absolute precoding information is more advantageous for a communication link than the differential precoding information.

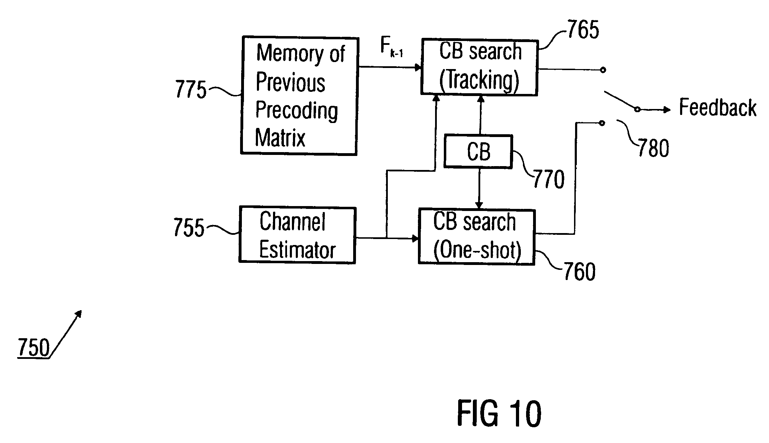

Fig. 10 shows another embodiment of a receiver apparatus 750. The receiver apparatus 750 comprises a channel estimator 755 for providing a channel estimate to a codebook searcher 760, which is adapted for searching a one-shot codebook, the channel estimator 755 further providing the channel estimate to another codebook searcher 765, which is adapted for searching in a tracking capable codebook. In the embodiment of the receiver apparatus 750 depicted in Fig. 10 the codebook searcher 765 and the codebook searcher 760 access the same codebook 770. In another embodiment they may have separated codebooks. The receiver apparatus 750 further comprises a memory unit 775, which provides the codebook searcher 765 with tracking capability with the previous precoding matrix in order to enable a codebook search as described above. Furthermore, the embodiment depicted in Fig. 10 comprises a switch 780, which indicates that the embodiment can either transmit precoding information based on a one-shot codebook, i.e. absolute precoding information, respectively can transmit tracking capable update information being based on a codebook with tracking capability, i.e. differential precoding information.

In another embodiment the receiver apparatus 700 respectively the detector 710 is adapted for detecting the situation in which the absolute precoding information is more advantageous based on a range of the absolute precoding information and the range of the differential precoding information. In this embodiment differential precoding information is provided for tracking small changes in the radio channel. However, the codebook is not able to track faster changes in the radio channel as for example evoked by excessive fast fading, high mobility or Doppler-scenarios. Whenever the change in the channel is too large, the detector 710 may decide on transmitting absolute precoding information. In another embodiment the transmit unit 720 is adapted for transmitting an indicator indicating whether currently transmitted precoding information is absolute or differential. This indicator can be implemented by a single bit to be transmitted within a feedback or control channel, indicating how the contained control information shall be interpreted.

In another embodiment the receiver apparatus may be adapted for receiving multi-carrier signals and be operative for providing precoding information operation of each of or a group of carriers in the multi-carrier signals. The receiver apparatus (700) can e.g. provide precoding information in terms of a matrix codebook index. In another embodiment the receiver apparatus (700) may provide differential precoding information on the basis of a matrix codebook, the matrix codebook having a special codebook index for absolute precoding information, the absolute precoding information being provided on the basis of a column vector of an absolute precoding matrix.

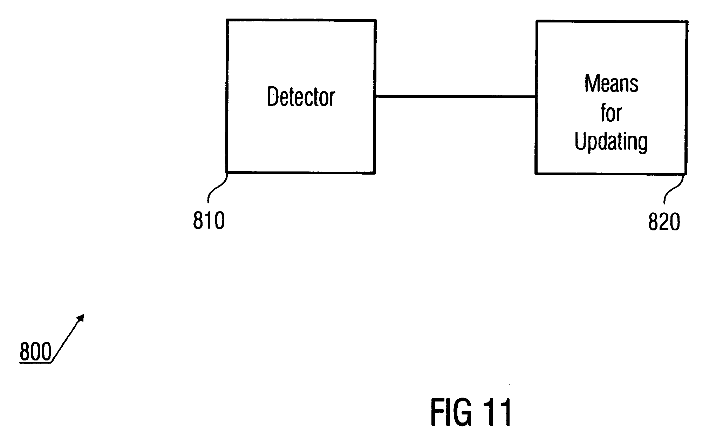

Fig. 11 shows an embodiment of a transmitter apparatus 800. The transmitter apparatus 800 is adapted for transmitting a signal using precoding, the precoding being updated on a precoding information, comprising a detector 810 for detecting an event and a means for updating 820 with absolute precoding information at a first time instant in response to a detected occurrence of the event and for updating with differential precoding information at a second time instant different from the first time instant. In one embodiment the detector 810 is adapted for detecting as the event, a lapse of a defined period since an earlier time instant at which the absolute precoding information was received or, as the event, a situation in which the absolute precoding information is more advantageous for a communication link than the differential precoding information. In another embodiment the transmitter apparatus 800 further comprises a receiver for receiving the absolute precoding information or the differential precoding information. In another embodiment the receiver is adapted for providing an indicator whether the situation in which the absolute precoding information is more advantageous than the differential precoding information has occurred. In one embodiment, the transmitter apparatus may be able to judge the situation by estimating a radio channel itself.

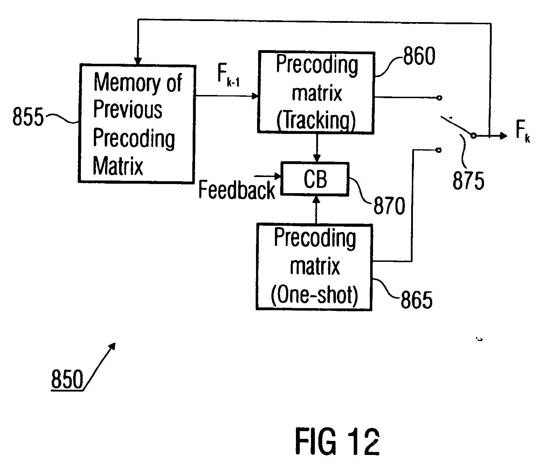

Fig. 12 shows another embodiment of a transmitter apparatus 850. The transmitter apparatus 850 comprises a memory 855 for storing a previous precoding matrix $F_{k-1}$, which is provided to a precoding matrix codebook searcher with tracking capability 860. The transmitter apparatus 850 further comprises a precoding matrix searcher 865 for one-shot-mode 865, which has a common codebook 870 with the precoding matrix codebook searcher 860 for tracking mode. The transmitter apparatus 850 further comprises a switch 875, which can switch between precoding based on tracking, i.e. based on differential precoding information or precoding based on one-shot updates, i.e. precoding based on absolute precoding information. In another embodiment of the transmitter apparatus 800 separate codebooks are available for absolute and differential precoding information.

The transmitter apparatus (800) may in one embodiment be adapted for transmitting multi-carrier signals and being operative for precoding each of or a group of carriers in the multi-carrier signals with differential or absolute precoding information. The transmitter apparatus (800) can precode on a basis of a matrix codebook index and the matrix codebook may have a special codebook index for absolute precoding information, the absolute precoding information being provided on the basis of a column vector of an absolute precoding matrix.

The embodiments described above provide a mechanism to switch between tracking and one-shot codebook mode to combat the situation where sudden channel changes or feedback errors occur. According to an embodiment, the precoding matrix generation at the transmitter apparatus and the codebook search are performed either in tracking or in one-shot codebook mode. In one embodiment, one codebook is shared between the two modes, and in yet another separate codebooks are used. The switching between the two modes can for example in one embodiment be done in a periodical manner according to a predetermined period known to the transmitter and the receiver. In another embodiment switching can be done based on the feedback from the receiver, e.g. by an indicator used within the feedback.

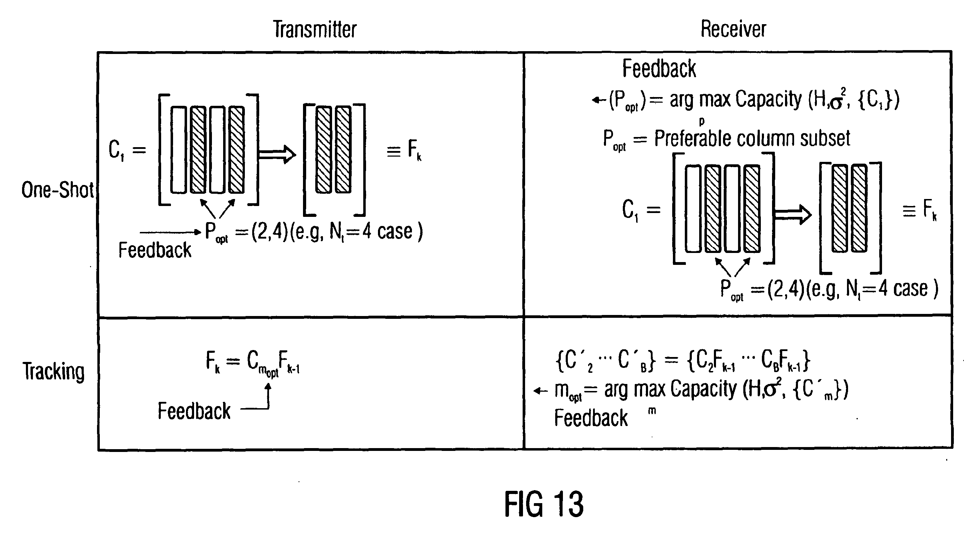

Fig. 13 shows a table with 4 cells, where the cells on the left hand side refer to the transmitter, the cells on the right hand side refer to the receiver, the cells at the top refer to one-shot mode, and the cells at the bottom refer to tracking mode. In one-shot mode, it is preferable to use a column vector index as a precoding vector, as is described in detail in R1-050903, Qualcomm, Europe, "Description and link simulations of MIMO schemes for OFDMA based E-UTRA downlink evaluation".

As can be seen from Fig. 13 on the transmitter side in one-shot mode, column vectors are chosen from a codebook and used as precoding matrix. The example considered in Fig. 13 utilizes four transmit antennas, i.e. $N_t=4$. On the receiver side in one-shot mode from the same codebook, i.e. from the same matrix, column vectors are chosen accordingly, for example for maximizing a channel capacity as indicated in Fig. 13. The preferable column subset is then signaled to the transmitter. In tracking mode, the transmitter applies a signaled update matrix to the previous precoding matrix according to the description above. The receiver evaluates an optimized update matrix index according to what was described above and feedbacks it to the transmitter. In tracking mode, the initial precoding matrix, which is determined in one-shot mode, can be set using one-shot mode. From there it can be updated using tracking mode.

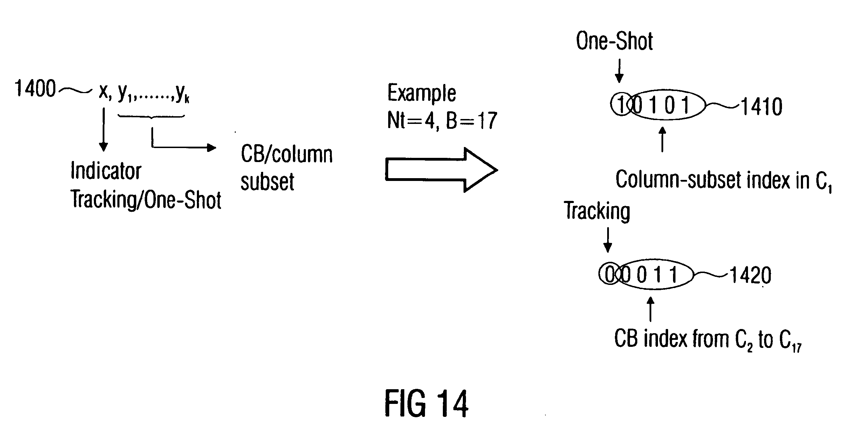

Fig. 14 shows an embodiment of a signaling scheme. It is supposed that a signaling word comprises a number of digits according to the signaling word 1400. In the embodiment depicted in Fig. 14, the signaling word 1400 comprises an indicator at its first digit, indicating whether tracking or one-shot mode is used. The other digits refer to a codebook index in case of tracking mode, respectively, to a column subset of a matrix in one-shot mode. Again considering the example of four transmit antennas, i.e. $N_t=4$, the two sample code words 1410 and 1420 may result. The sample signaling word 1410 has a one in its first digit, indicating one-shot note. Therefore, the potential transmitter would know that the last digits refer to a column subset index $C_1$. If the signaling word 1420 is received, the transmitter would know by the first digit being equal to zero that tracking mode is used. The last 4 digits of the signaling word then refer to a codebook index for example for the codebook $C_2$ to $C_{17}$. The codebook considered in Fig. 17 for tracking mode and one-shot mode comprises B=17 matrices of which the first $C_1$ is dedicated to one-shot mode and $C_2$ to $C_{17}$ are dedicated to tracking mode.

The first bit of the 5-bit index is the indicating bit if tracking or one-shot mode is used. The other bits respectively, are column subscript indices in the one-shot case, and codebook indices in the tracking case. In this way, the same feedback bits can be used for both modes.

Obviously, if the switching between the two modes is performed on a periodical basis according to a predetermined time scheme, the first bit x in Fig. 14 is not necessary and can be omitted. The described embodiments can be straight forwardly combined with for example OFDM (OFDM = orthogonal frequency division multiplexing) - Systems, in which precoding should be conducted for subcarriers or chunks of subcarriers. In general, the embodiments can be used with any multiple access system.

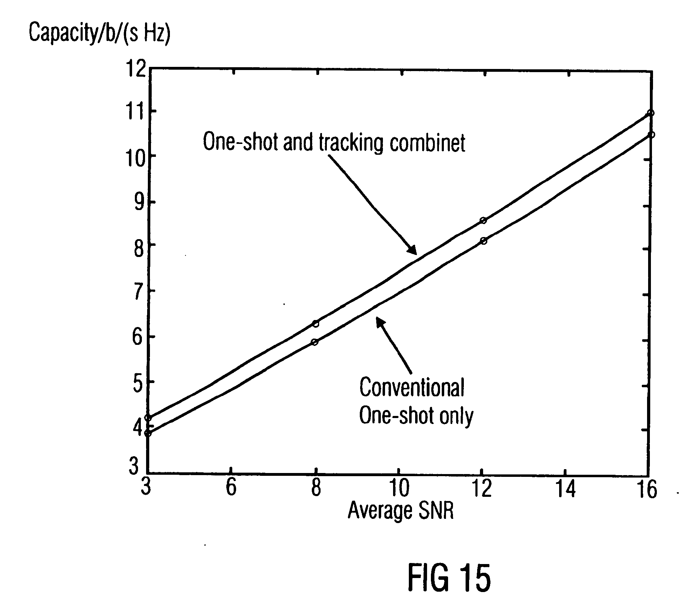

Fig. 15 shows a viewgraph illustrating the achievable capacity improvements with an embodiment. Fig. 15 shows two capacity figures in b/(s Hz) versus an average SNR of the embodiment and the conventional scheme in one-shot mode only. The example scenario utilizes $N_t=4$ transmit antennas, $N_r=2$ receive antennas, and $N_s=2$ data streams. When severe radio channel changes are to be expected in a certain environment the conventional scheme only uses one-shot mode, contrary hereto the embodiment can utilize the above-mentioned switching mechanism. The capacity achieved with the embodiment is shown at the top, the capacity achieved with the conventional concept is shown at the bottom of Fig. 15. It can be seen that the embodiment achieves about 0.5 b/(s Hz) capacity gain, using one extra bit as mode indicator.

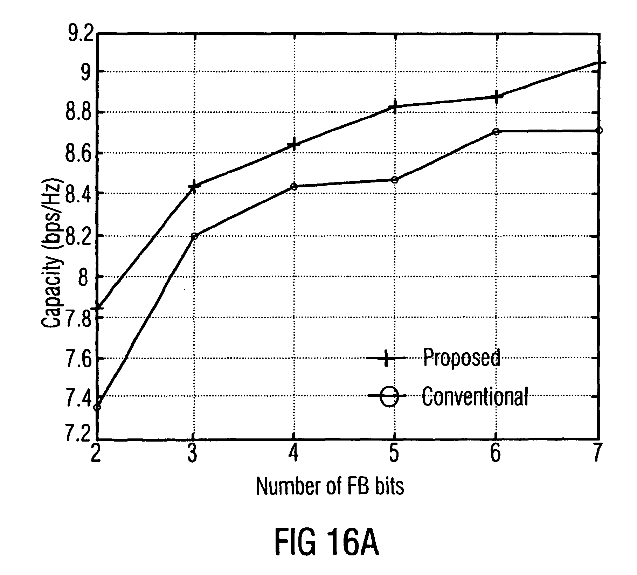

Fig. 16a shows a viewgraph of an evaluated link capacity in b/(s Hz) versus a number of feedback bits. For the simulation of the capacity figures depicted in Fig. 15 a number of $N_t=4$ transmit antennas, a number of $N_r=2$ receive antennas, and a number of $N_s=2$ data streams were assumed. The viewgraph shows the conventional scheme indicated by circles and the embodiment using crosses. It can be seen that the embodiments achieve a higher capacity independent of the number of feedback bits used. It is therefore an advantage of the embodiments that they provide a higher link and system capacity.

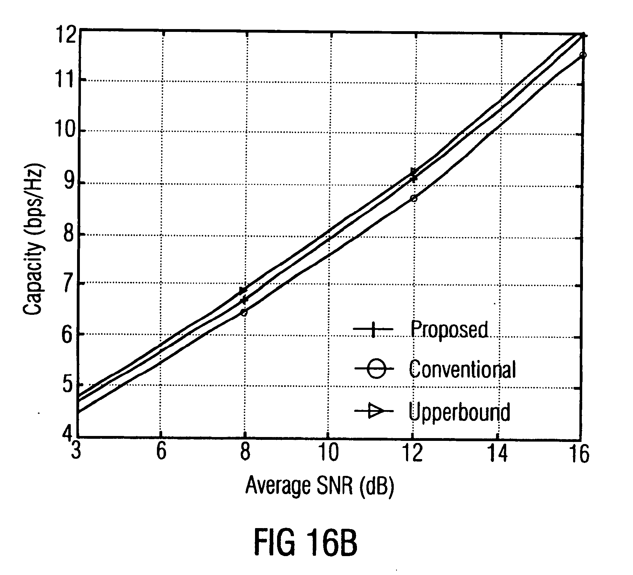

Fig. 16b shows another viewgraph, showing a link capacity in b/(s Hz) versus an average SNR. For the simulations, of which the results are depicted in Fig. 16b, a number of $N_t=4$ transmit antennas, a number of $N_r=2$ receive antennas, and a number of $N_s=2$ data streams were assumed. The viewgraph shows three capacity diagrams one of the proposed approach indicated by crosses, one of the conventional approach indicated by circles, and one of the theoretical upper bound (Shannon bound). The viewgraph shows that the capacity of the proposed approach is closer to the upper bound than the conventional approach. Embodiments therefore provide the advantage that the capacity of a link or system is higher than for the conventional approach.

In summary embodiments provide the advantage that a higher capacity can be achieved in MIMO transmission systems using precoding. Furthermore, less feedback is required for embodiments than for conventional approaches. Therewith, the spectral efficiency of MIMO-systems can be improved, extra capacity due to the reduced feedback can be utilized.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is therefore a machine readable carrier, the program code being operative for performing the inventive methods when the computer program products runs on a computer. In other words, the inventive methods are, therefore, a computer program having a program code for performing at least one to the inventive methods when the computer program runs on a computer.

**Claims**

1. Receiver apparatus (700) for providing precoding information, comprising

a channel estimator for providing a channel estimate of a radio channel between a transmitter and the receiver apparatus (700);
a memory for a previous precoding information;
a detector (710) for detecting an event; and
a transmit unit (720) for transmitting absolute precoding information at a first time instant in response to a detected occurrence of the event and for transmitting differential precoding information at a second time instant different from the first time instant,
wherein the detector (710) is adapted for detecting the occurrence of the event based on the channel estimate and the previous precoding information.

2. Receiver apparatus (700) of claim 1, wherein the detector (710) is adapted for detecting, as the event a situation at which the absolute precoding information is more advantageous for a communication link than the differential precoding information.

3. Receiver apparatus (700) according to claim 2, wherein the detector (710) is adapted for detecting the occurrence of the event of a situation at which the absolute precoding information is more advantageous for a communication link than the differential precoding information based on a change of the radio channel.

4. Receiver apparatus (700) of one of the claims 2 or 3, wherein the detector (710) is adapted for detecting the situation in which the absolute precoding information is more advantageous based on a range of the absolute precoding information and a range of the differential precoding information.

5. Receiver apparatus (700) of one of the claims 1 to 4, wherein the transmit unit (720) is adapted for transmitting an indicator indicating whether transmitting absolute precoding information or transmitting differential precoding information.

6. Receiver apparatus (700) of one of the claims 1 to 5, further comprising an absolute precoding information codebook having a limited set of absolute precoding information and a differential precoding information codebook having a limited set of differential precoding information.

7. Receiver apparatus (700) of one of the preceding claims, wherein the absolute precoding information codebook and the differential precoding information codebook are comprised in one precoding information codebook.

8. Receiver apparatus (700) of one of the preceding claims, further adapted for controlling a precoding operation in a transmitter within a transmission scheme having a first number of transmit antennas and a second number of receive antennas, the first number being larger than one and the second number being larger or equal to one, comprising a channel estimator for estimating a radio channel between the transmitter and the receiver apparatus (700) based on a received signal to determine a radio channel estimate, a processing unit for providing possible new precoding matrices based on update information items stored in an update codebook and an old precoding matrix, a searcher for searching a new precoding matrix fulfilling an optimization criterion based on the radio channel estimate among the possible new precoding matrices, and a transmit unit for transmitting an update matrix index, which is associated with the new precoding matrix.

9. Receiver apparatus (700) of one of the claims 6 to 8, further comprising a storage medium having the absolute precoding information codebook or the differential precoding information codebook stored thereon, the absolute precoding information codebook or differential precoding information codebook having at least two update matrices to be used in a precoding operation, each update matrix being associated with an update matrix index, the update matrices being calculated by generating a first matrix and generating a second matrix being correlated with the first matrix by a correlation degree, and combining the first matrix and the second matrix to obtain one update matrix, where for calculating different update matrices a different correlation degree or a different first matrix and the same correlation degree is used.

10. Receiver apparatus (700) of one of the claims 1 to 9, being adapted for receiving multi-carrier signals and being operative for providing precoding information operation of each of or a group of carriers in the multi-carrier signals.

11. Receiver apparatus (700) of one of the claims 1 to 10, being adapted for providing precoding information in terms of a matrix codebook index.

**12.** Receiver apparatus (700) of one of the claims 1 to 11, being adapted for providing differential precoding information on the basis of a matrix codebook, the matrix codebook having a special codebook index for absolute precoding information, the absolute precoding information being provided on the basis of one or more column vectors of an absolute precoding matrix.

**13.** Method for providing precoding information, comprising
providing a channel estimate of a radio channel between a transmitter and a receiver;
storing a previous precoding information;
detecting an occurrence of an event based on the channel estimate and the previous precoding information;
transmitting absolute precoding information at a first time instant in response to a detected occurrence of the event; and
transmitting differential precoding information at a second time instant different from the first time instant.

**14.** Computer program having a program code adapted to perform the method of claim 13 when the program code runs on a computer.


**Patentansprüche**

**1.** Empfängervorrichtung (700) zum Bereitstellen von Vorcodierungsinformationen, die folgende Merkmale aufweist:

eine Kanalschätzeinrichtung zum Bereitstellen einer Kanalschätzung eines Funkkanals zwischen einem Sender und der Empfängervorrichtung (700);
einen Speicher für vorherige Vorcodierungsinformationen;
einen Detektor (710) zum Erfassen eines Ereignisses; und
eine Sendeeinheit (720) zum Senden von absoluten Vorcodierungsinformationen zu einem ersten Zeitpunkt ansprechend auf einen erfassten Auftretensfall des Ereignisses und zum Senden von Differenz-Vorcodierungsinformationen zu einem zweiten Zeitpunkt, der sich von dem ersten Zeitpunkt unterscheidet,
wobei der Detektor (710) dazu angepasst ist, den Auftretensfall des Ereignisses auf der Basis der Kanalschätzung und der vorherigen Vorcodierungsinformationen zu erfassen.

**2.** Empfängervorrichtung (700) gemäß Anspruch 1, bei der der Detektor (710) dazu angepasst ist, als das Ereignis eine Situation zu erfassen, bei der die absoluten Vorcodierungsinformationen für eine Kommunikationsverbindung vorteilhafter sind als die Differenz-Vorcodierungsinformationen.

**3.** Empfängervorrichtung (700) gemäß Anspruch 2, bei der der Detektor (710) dazu angepasst ist, auf der Basis einer Änderung des Funkkanals den Auftretensfall des Ereignisses einer Situation zu erfassen, bei der die absoluten Vorcodierungsinformationen für eine Kommunikationsverbindung vorteilhafter sind als die Differenz-Vorcodierungsinformationen.

**4.** Empfängervorrichtung (700) gemäß einem der Ansprüche 2 oder 3, bei der der Detektor (710) dazu angepasst ist, auf der Basis einer Bandbreite der absoluten Vorcodierungsinformationen und einer Bandbreite der Differenz-Vorcodierungsinformationen die Situation zu erfassen, bei der die absoluten Vorcodierungsinformationen vorteilhafter sind.

**5.** Empfängervorrichtung (700) gemäß einem der Ansprüche 1 bis 4, bei der die Sendeeinheit (720) dazu angepasst ist, einen Indikator zu senden, der angibt, ob absolute Vorcodierungsinformationen gesendet werden oder ob Differenz-Vorcodierungsinformationen gesendet werden.

**6.** Empfängervorrichtung (700) gemäß einem der Ansprüche 1 bis 5, die ferner ein Absolute-Vorcodierungsinformationen-Codebuch, das eine begrenzte Menge an absoluten Vorcodierungsinformationen aufweist, und ein Differenz-Vorcodierungsinformationen-Codebuch, das eine begrenzte Menge an Differenz-Vorcodierungsinformationen aufweist, umfasst.

**7.** Empfängervorrichtung (700) gemäß einem der vorhergehenden Ansprüche, bei der das Absolute-Vorcodierungsinformationen-Codebuch und das Differenz-Vorcodierungsinformationen-Codebuch in einem Vorcodierungsinformationen-Codebuch enthalten sind.

**8.** Empfängervorrichtung (700) gemäß einem der vorhergehenden Ansprüche, die ferner dazu angepasst ist, einen Vorcodierungsvorgang bei einem Sender innerhalb eines Sendeschemas zu steuern, das eine erste Anzahl von Sendeantennen und eine zweite Anzahl von Empfangsantennen aufweist, wobei die erste Anzahl größer ist als eins und die zweite Anzahl größer oder gleich eins ist, mit einer Kanalschätzeinrichtung zum Schätzen eines Funkkanals zwischen dem Sender und der Empfängervorrichtung (700) auf der Basis eines empfangenen Signals, um eine Funkkanalschätzung zu bestimmen, einer Verarbeitungseinheit zum Bereitstellen möglicher neuer Vorcodierungsmatrizen auf der Basis von Aktualisierungsinformationsposten, die in einem Aktualisierungscodebuch gespeichert sind, und einer alten Vorcodierungsmatrix, einer Sucheinrichtung zum Suchen einer neuen Vorcodierungsmatrix, die ein Optimierungskriterium erfüllt, auf der Basis der Funkkanalschätzung unter den möglichen neuen Vorcodierungsmatrizen, und einer Sendeeinheit zum Senden eines Aktualisierungsmatrixindizes, der der neuen Vorcodierungsmatrix zugeordnet ist.

**9.** Empfängervorrichtung (700) gemäß einem der Ansprüche 6 bis 8, die ferner ein Speichermedium umfasst, auf dem das Absolute-Vorcodierungsinformationen-Codebuch oder das Differenz-Vorcodierungsinformationen-Codebuch gespeichert ist, wobei das Absolute-Vorcodierungsinformationen-Codebuch oder das Differenz-Vorcodierungsinformationen-Codebuch zumindest zwei Aktualisierungsmatrizen aufweist, die bei einem Vorcodierungsvorgang verwendet werden sollen, wobei jede Aktualisierungsmatrix einem Aktualisierungsmatrixindex zugeordnet ist, wobei die Aktualisierungsmatrizen berechnet werden, indem eine erste Matrix erzeugt wird und indem eine zweite Matrix erzeugt wird, die durch einen Korrelationsgrad mit der ersten Matrix korreliert, und wobei die erste Matrix und die zweite Matrix kombiniert werden, um eine Aktualisierungsmatrix zu erhalten, wobei zum Berechnen verschiedener Aktualisierungsmatrizen ein unterschiedlicher Korrelationsgrad oder eine andere erste Matrix und derselbe Korrelationsgrad verwendet werden.

**10.** Empfängervorrichtung (700) gemäß einem der Ansprüche 1 bis 9, die dazu angepasst ist, Mehrträgersignale zu empfangen, und die dahin gehend wirksam ist, einen Vorcodierungsinformationsvorgang eines jeden Trägers oder einer Gruppe von Trägern bei den Mehrträgersignalen bereitzustellen.

**11.** Empfängervorrichtung (700) gemäß einem der Ansprüche 1 bis 10, die dazu angepasst ist, Vorcodierungsinformationen in Bezug auf einen Matrixcodebuchindex bereitzustellen.

**12.** Empfängervorrichtung (700) gemäß einem der Ansprüche 1 bis 11, die dazu angepasst ist, Differenz-Vorcodierungsinformationen auf der Basis eines Matrixcodebuchs bereitzustellen, wobei das Matrixcodebuch einen speziellen Codebuchindex für absolute Vorcodierungsinformationen aufweist, wobei die absoluten Vorcodierungsinformationen auf der Basis eines oder mehrerer Spaltenvektoren einer absoluten Vorcodierungsmatrix bereitgestellt werden.

**13.** Verfahren zum Bereitstellen von Vorcodierungsinformationen, das folgende Schritte umfasst:

Bereitstellen einer Kanalschätzung eines Funkkanals zwischen einem Sender und einem Empfänger;
Speichern vorheriger Vorcodierungsinformationen;
Erfassen eines Auftretensfalls eines Ereignisse auf der Basis der Kanalschätzung und der vorherigen Vorcodierungsinformationen;
ansprechend auf einen erfassten Auftretensfall des Ereignisses, Senden absoluter Vorcodierungsinformationen zu einem ersten Zeitpunkt; und
Senden von Differenz-Vorcodierungsinformationen zu einem zweiten Zeitpunkt, der sich von dem ersten Zeitpunkt unterscheidet.

**14.** Computerprogramm, das einen Programmcode aufweist, der dazu angepasst ist, das Verfahren gemäß Anspruch 13 durchzuführen, wenn der Programmcode auf einem Computer abläuft.

**Revendications**

**1.** Récepteur (700) pour fournir des informations de précodage, comprenant:

un estimateur de canal destiné à fournir une estimation d'un canal de radiocommunication entre un émetteur et le récepteur (700);
une mémoire pour une information de précodage antérieure;

un détecteur (710) destiné à détecter un événement; et

une unité de transmission (720) destinée à transmettre les informations de précodage absolu à un premier moment en réponse à une occurrence détectée de l'événement et à transmettre des informations de précodage différentiel à un deuxième moment différent du premier moment,

dans lequel le détecteur (710) est adapté pour détecter l'occurrence de l'événement sur base de l'estimation de canal et des informations de précodage antérieures.

2. Récepteur (700) selon la revendication 1, dans lequel le détecteur (710) est adapté pour détecter comme événement une situation dans laquelle les informations de précodage absolu sont plus avantageuses pour un lien de communication que les informations de précodage différentiel.

3. Récepteur (700) selon la revendication 2, dans lequel le détecteur (710) est adapté pour détecter l'occurrence de l'événement d'une situation dans laquelle les informations de précodage absolu sont plus avantageuses pour un lien de communication que les informations de précodage différentiel sur base d'un changement du canal de radiocommunication.

4. Récepteur (700) selon l'une des revendications 2 ou 3, dans lequel le détecteur (710) est adapté pour détecter la situation dans laquelle les informations de précodage absolu sont plus avantageuses sur base d'une plage des informations de précodage absolu et d'une plage des informations de précodage différentiel.

5. Récepteur (700) selon l'une des revendications 1 à 4, dans lequel l'unité de transmission (720) est adaptée pour transmettre un indicateur indiquant s'il y a lieu de transmettre les informations de précodage absolu ou de transmettre les informations de précodage différentiel.

6. Récepteur (700) selon l'une des revendications 1 à 5, comprenant par ailleurs un livre de codes d'informations de précodage absolu présentant un ensemble limité d'informations de précodage absolu et un livre de codes d'informations de précodage différentiel présentant un ensemble limité d'informations de précodage différentiel.

7. Récepteur (700) selon l'une des revendications précédentes, dans lequel le livre de codes d'informations de précodage absolu et le livre de codes d'informations de précodage différentiel sont compris dans un seul livre de codes d'informations de précodage.

8. Récepteur (700) selon l'une des revendications précédentes, adapté par ailleurs pour commander une opération de précodage dans un émetteur dans un schéma de transmission présentant un premier nombre d'antennes d'émission et un deuxième nombre d'antennes de réception, le premier nombre étant supérieur à un et le deuxième nombre étant supérieur ou égal à un, comprenant un estimateur de canal destiné à estimer un canal de radiocommunication entre l'émetteur et le récepteur (700) sur base d'un signal reçu, pour déterminer une estimation de canal de radiocommunication, une unité de traitement destinée à fournir de possibles nouvelles matrices de précodage sur base de points d'information de mise à jour mémorisés dans un livre de codes de mise à jour et une ancienne matrice de précodage, un chercheur destiné à chercher une nouvelle matrice de précodage remplissant un critère d'optimisation sur base de l'estimation de canal de radiocommunication parmi les possibles nouvelles matrices de précodage, et une unité d'émission destinée à émettre un indice de matrice de mise à jour qui est associé à la nouvelle matrice de précodage.

9. Récepteur (700) selon l'une des revendications 6 à 8, comprenant par ailleurs un support de mémoire présentant, y mémorisé, le livre de code d'informations de précodage absolu ou le livre de code d'informations de précodage différentiel, le livre de code d'informations de précodage absolu ou le livre de code d'informations de précodage différentiel présentant au moins deux matrices de mise à jour à utiliser au cours d'une opération de précodage, chaque matrice de mise à jour étant associée à un indice de matrice de mise à jour, les matrices de mise à jour étant calculées en générant une première matrice et en générant une deuxième matrice corrélée avec la première matrice selon un degré de corrélation, et en combinant la première matrice et la deuxième matrice pour obtenir une matrice de mise à jour, où il est utilisé, pour calculer différentes matrices de mise à jour, un degré de corrélation différent ou une première matrice différente et le même degré de corrélation.

10. Récepteur (700) selon l'une des revendications 1 à 9, adapté pour recevoir des signaux à plusieurs porteuses et opérationnel pour fournir une opération d'informations de précodage de chacune des ou d'un groupe de porteuses dans les signaux à plusieurs porteuses.

**11.** Récepteur (700) selon l'une des revendications 1 à 10, adapté pour fournir des informations de précodage en termes d'indice de livre de codes de matrice.

**12.** Récepteur (700) selon l'une des revendications 1 à 11, adapté pour fournir des informations de précodage différentiel sur base d'un livre de codes de matrice, le livre de codes de matrice présentant un indice de livre de codes spécial pour les informations de précodage absolu, les informations de précodage absolu étant fournies sur base d'un ou plusieurs vecteurs de colonne d'une matrice de précodage absolu.

**13.** Procédé pour fournir des informations de précodage, comprenant
fournir une estimation d'un canal de radiocommunication entre un émetteur et un récepteur;
mémoriser des informations de précodage antérieures;
détecter une occurrence d'un événement sur base d'une estimation de canal et des informations de précodage antérieures;
émettre des informations de précodage absolu à un premier moment en réponse à une occurrence détectée de l'événement; et
émettre des informations de précodage différentiel à un deuxième moment différent du premier moment.

**14.** Programme d'ordinateur présentant un code de programme adapté pour réaliser le procédé de la revendication 13 lorsque le code de programme est exécuté sur un ordinateur.

Codebook 122

Precoding Matrix Memory 124

Processing Unit 120

Searcher 130

Channel Estimator 110

Channel Estimator 140

100

**FIG 1**

EP 1 919 098 B1

$m_{opt}$

$H_k$

$F_k$

CB
searcher

Channel
Estimator

160

$C'_m$

155

Memory of
Previous
Precoding
Matrix

$F_{k-1}$

170

Received
Signal

$C_m$

165

CB

175

150

FIG 2

EP 1 919 098 B1

Combiner

Precoding Matrix Memory

245

240

Receive Unit

Update Matrix Generator

Storage Means

210

230

220

200

FIG 3

EP 1 919 098 B1

$$F_k = C_{m_{opt}} F_{k-1}$$

Left Right

**FIG 4**

EP 1 919 098 B1

$m_{opt}$

Previous Precoding Matrix 356

$F_{k-1}$

CB 352

362 1

$N_t$

Tx

360 362

354

Encoder & symbol mapper

358

350

1 312

$N_r$

312 314

Rx

$F_k$

Previous Precoding Matrix

$F_{k-1}$

324

CB searcher

320

322

CB 326

$H_k$

Channel Estimator

316

318

MMSE_SIC Detector & Decoder

310

300

FIG 5

EP 1 919 098 B1

Generator

Combiner

405

410

400

# FIG 6

EP 1 919 098 B1

420

Random unitary matrix → V (t)

Δt → Time shifted Random unitary matrix → V (t+Δt)

430

440

$$G = V(t)V(t+\Delta t)^H \equiv C_m = \begin{bmatrix} g_{11} & e_{12} & \cdots & e_{1N_t} \\ e_{21} & g_{22} & \cdots & e_{2N_t} \\ \vdots & \vdots & \ddots & \vdots \\ e_{N_t1} & e_{N_t2} & \cdots & g_{N_tN_t} \end{bmatrix}$$

FIG 7

EP 1 919 098 B1

for m = 1: B

451. Generate $N_t \times N_t$ random matrix $Q(t)$, $Q(t+\Delta t_m)$

452. Compute SVD

$$Q(t) = U(t)D(t)V(t)^H$$

$$Q(t+\Delta t_m) = U(t+\Delta t_m)D(t+\Delta t_b)V(t+\Delta t_m)^H$$

453. Define $C_m = V(t)V(t+\Delta t_m)^H$

end

FIG 8A

FIG 8B

EP 1 919 098 B1

Detector

Transmit
Unit

710

720

700

FIG 9

EP 1 919 098 B1

775 — Memory of Previous Precoding Matrix

$F_{k-1}$

CB search (Tracking) — 765

CB — 770

Feedback

780

755 — Channel Estimator

CB search (One-shot) — 760

750

**FIG 10**

FIG 11

EP 1 919 098 B1

855

Memory of Previous Precoding Matrix

$F_{k-1}$

Precoding matrix (Tracking) — 860

Feedback

CB — 870

875

$F_k$

Precoding matrix (One-shot) — 865

850

**FIG 12**

FIG 13

$1400 \sim x, y_1, \ldots\ldots, y_k$

Indicator
Tracking/One-Shot

CB/column subset

Example
$N_t = 4, B = 17$

One-Shot

$(1\ 0)\ 1\ 0\ 1 \sim 1410$

Column-subset index in $C_1$

Tracking

$(0\ 0)\ 0\ 1\ 1 \sim 1420$

CB index from $C_2$ to $C_{17}$

## FIG 14

EP 1 919 098 B1

Capacity/b/(s Hz)

FIG 15

EP 1 919 098 B1

FIG 16A

EP 1 919 098 B1

FIG 16B

Feedback (FB): Preferable CB index: $m_{opt}$

$1740$ — $\{C_1 C_2 \cdots C_B\}$

$1740$ — Code Book — $\{C_1 C_2 \cdots C_B\}$

$1712$    1

$1722$    1

$S_k$ → Precoder $x_k = F_k s_k$

$1730$

$X_k$ → Tx

$N_t$

$H_k$

$N_r$

Rx

Detector

$1710$

$1712$

$1760$

$1722$

$1720$

$1750$

FIG 17    (State of the art)

EP 1 919 098 B1

FIG 18 (State of the art)

FIG 19 (State of the art)

EP 1 919 098 B1

EP 1 919 098 B1

FIG 20 (State of the art)

# EP 1 919 098 B1

**REFERENCES CITED IN THE DESCRIPTION**

**Patent documents cited in the description**

- WO 03069800 A1